# EUROPEAN PATENT SPECIFICATION

(11) **EP 0 730 113 B1**
(45) Date of publication and mention of the grant of the patent: **08.09.1999**
(21) Application number: 96102987.3
(22) Date of filing: 28.02.1996
(51) Int. Cl.: F16J 15/52

(54) **An improved seal with an elastic member**
Abdichtung mit einem elastischen Formteil
Joint d'étanchéité comportant une partie élastique

(30) Priority: 03.03.1995 IT TO950166
(43) Date of publication of application: 04.09.1996
(73) Proprietor: RFT S.p.A., 10128 Torino (IT)
(72) Inventor: Gambino, Giuseppe, 10143 Torino (IT)
(74) Representative: Plebani, Rinaldo

(56) References cited:
- EP-A- 0 547 405
- FR-A- 1 399 278
- US-A- 3 279 832

## Description

The present invention relates to an improvement in a seal with an elastic sealing member for reciprocable couplings and, more particularly, to a seal with an elastic sealing member for protecting the zone of coupling between two structural parts which reciprocate relative to each other with rotary and possibly translatory motion. To advantage such seals are used in environments and/or situations which are highly contaminated by dust, liquids, etc, and where the reciprocating movements of the coupled parts have a very wide frequency range.

A specific but non-limitative application is that of the field of road vehicles, for protecting the bearings in the attachments for the swing arms of the vehicle suspensions.

In the current art it is known, for this purpose, to use a seal with an elastic sealing member which is constituted by an annular cup-shaped member of elastomeric material of constant thickness. The member is bounded at its outer and inner peripheries by enlargements which encapsulate two metal reinforcing elements which are completely covered by the elastomeric material. Since the two reinforcing elements are mounted in cooperating seats with the interposition of a thin layer of elastomeric material, rather than with metal-metal contact, during operation relative sliding movement can occur between each of the reciprocating parts and the corresponding reinforcing element with consequent problems such as wear, overheating, lack of sealing, the parts coming loose, etc. Similar problems may be also be caused by imperfect coaxial assembly of the seal with the relatively movable members between which the seal is intended to form a seal.

Finally, the performance of seals with elastic members of the type described above is clearly dependent on the mechanical characteristics of the sliding member; members which are too rigid may, in fact, not act very well while members which are too thin may break in use due to the high fatigue stresses to which they are subject.

The object of the present invention is to provide a seal with an elastic sealing member which is free from the problems encountered with seals of this type which are currently available in the art and, in particular, to provide a seal which is simple and economical to manufacture, provides extremely effective sealing, can operate with low friction and which has a long working life.

In accordance with the present invention, there is provided an improved seal with an elastic sealing member for couplings in relative reciprocating motion, comprising an elastomeric member shaped as an annular flange bounded by thickened inner and outer edge portions, the inner edge portion being vulcanised to an outer surface of a cylindrical part of a first metal reinforcing element, the outer edge portion being vulcanised to an inner surface of a cylindrical part of a second metal reinforcing element;
characterised in that the member has a plurality of reinforcing ribs formed integrally therewith on a peripheral surface of the member of the same elastomeric material as the member and extending radially between the said edge portions. EP-A-547405 discloses a seal according to the preamble of claim 2.

This and other characteristics of the seal according to the present invention will become clearer from the following description of a preferred embodiment, given purely by way of non-limitative example, with reference to the appended drawings, in which:
Figure 1 is a partially-sectioned plan view of one assembled embodiment of the seal of the present invention;
Figure 2 is a front elevational view of an upper half of the seal of the present invention; and
Figure 3 is a vertical section taken on the line III-III of Figure 2 of the seal of the invention.

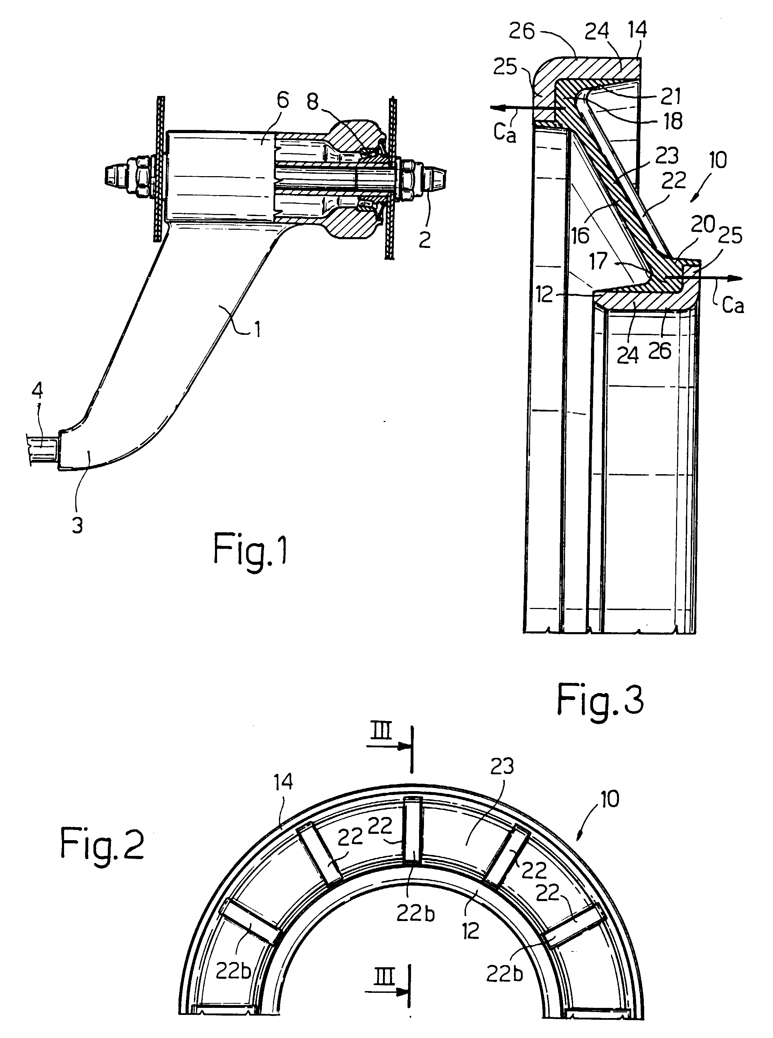

Figure 1 shows a typical example of use of the seal according to the invention for protecting a movable coupling between a swing arm 1 and a fixed shaft 2 for supporting the arm 1. At one end 3, the swing arm 1 supports an axle 4, for example for a vehicle wheel. In order to allow the wheel, which is not visible in the drawing, to move in a vertical plane to pass over rough ground, the arm 1 rotates in opposite senses (oscillates) about the shaft 2 through an angle of several tens of degrees, for example 46°, symmetrically about a median position.

The arm 1 is connected rigidly to a sleeve 6 coupled in known manner to the shaft 2 by a pair of rolling bearings 8 of which only the right-hand one is visible in the sectioned part of Figure 1. A seal 10 is force-fitted, that is with interference, in respective cylindrical seats in the sleeve 6 and in one of the races within the bearings 8, fixed to the shaft 2, by means of corresponding metal reinforcing elements 12 and 14 (Figures 2 and 3). One of these is thus fixed for rotation with the sleeve 6 while the other is fixed, through the race of the respective bearing 8, for rotation with the shaft 2.

The seal 10 includes a member 16 made from an elastomeric material with good characteristics of elasticity and fatigue strength. The member 16 is in the form of an annular flange of constant thickness and is bounded by an inner edge portion 17 and an outer edge portion 18 which are thickened in both the axial and the radial directions; in fact, the member 16 is cup-shaped and constituted by a substantially frusto-conical flange.

In use, the reinforcing elements 12 and 14 and the member 16 are mounted coaxially of the shaft 2 and the sleeve 6.

Both the inner edge portion 17 and the outer edge portion 18 have a bead 20 and 21 respectively, projecting axially from the edge portions 17 and 18 on the same side with respect to the member 16 and, more precisely, the outer side of the member when it is mounted in use, to the right in Figure 3. The inner and outer edge portions 17 and 18 respectively of the member are vulcanised to the reinforcing elements 12 and 14 respectively.

The member 16 must be designed to withstand all the stresses which are set up when the reinforcing elements are rotated through a given angle relative to each other in both senses alternately to follow the relative reciprocating rotational movements of the members 2 and 6 in use. Moreover, due to the tolerances in the components of the couplings, and wear or malfunctioning of these parts, it is also possible for the member 16 to be subject to a limited amount of axial stress. In these conditions the member is also subject to transverse stress in radial planes.

According to the invention, instead of entrusting the absorption of these stresses entirely to the member 16, the seal 10 has raised radial ribs 22 on an outer conical peripheral surface 23 of the member 16, these ribs being formed integrally with and of the same elastomeric material as the member 16 during the injection step. Surprisingly, the mechanical strength of the member 16 is thus increased considerably without causing a corresponding increase in its rigidity. The seal 10 according to the invention thus combines a high degree of elasticity with considerable strength which is obtainable in the prior art only at the expense of reducing the resilience of the seal.

In a non-limitative embodiment, not less than 12 radial ribs 22 are formed on the peripheral surface 23 during the molding of the seal 10, these being equi-angularly spaced and connected in a graded manner at their ends to both of the beads 20 and 21 of the member 16. It has in fact been found experimentally that this minimum number is the optimum for achieving the purposes of the invention in this particular application; if the dimensions of the seal 10 are increased, the number of ribs 22 may be increased consequently, while it is not appropriate to modify the thickness of the ribs, the optimal thickness being substantially equal to the thickness of the member 16.

Preferably, moreover, the injection molding step in which the seal 10 is formed is carried out with the provision of the injection nozzles of the mold in correspondence with the axes of the ribs 22 so that the corresponding injection points 22b (Figure 2) are on these latter (or at least on some of them); thus, while ensuring that a thin member 16 is formed, the risk of excessive injection pressure causing buckling of the membrane 16, which would result in wastage, is avoided.

The reinforcing elements 12 and 14 are normally made from steel and are co-molded with the member 16 to form the seal 10. Each reinforcing element is constituted by a cylindrical part 24 connected with continuity at one end to a part 25 which is bent radially towards the other reinforcing element so as to form a shoulder. In the sectional view of Figure 3, the reinforcing elements can be seen to have an L-shape in section.

As a result of the cup-shape of the member 16, any axial section of the member is inclined to a plane perpendicular to the axis of the shaft 2 so that the axial components Ca of the stresses induced in the member 16 are in opposite directions and are oriented as indicated in Figure 3. Hence the shoulders 25 are located at opposite ends of the member 16 in positions such as to oppose the said components Ca without the edge portions of the member being stressed so as to break from their reinforcing elements.

The cylindrical surface 26 of each reinforcing element 12 and 14 facing outwardly from the edge portions 17 and 18 of the member is worked with the precision necessary to ensure perfect fitting to the shaft 2 and the sleeve 6 respectively and is totally free from any elastomeric material; thus perfect centring of the gasket 10 is ensured with a better and more favourable distribution of stresses on the member 16 under load.

It will be understood that variations in shape and modifications in or replacements of parts of the improved sealing gasket of the invention may be made without thereby departing from the scope of the present invention as defined in the following claims.

## Claims

1. A seal (10) with an elastic sealing member of the type which can be inserted between two relatively reciprocable members (2,6) to protect them, comprising an elastomeric member (16) shaped as an annular flange bounded by thickened inner and outer edge portions (17,18), the inner edge portion (17) being vulcanised to an outer surface of a cylindrical part (24) of a first metal reinforcing element (12), the outer edge portion being vulcanised to an inner surface of a cylindrical part (24) of a second metal reinforcing element (14);
characterised in that the elastomeric member has a plurality of reinforcing ribs (22) formed integrally therewith on a peripheral surface (23) of the member and of the same elastomeric material thereas, the ribs extending radially between the said edge portions.

2. A seal according to Claim 1, characterised in that the plurality of ribs comprises at least twelve radial ribs (22) which are circumferentially equispaced from each other.

3. A seal according to Claim 1 or Claim 2, characterised in that the ribs are connected in a graded manner to peripheral beads (20,21) along the edge portions.

4. A seal according to any one of the preceding claims, characterised in that the thickness of the ribs (22) is substantially equal to the thickness of the elastomeric member (16).

5. A seal according to any one of the preceding claims, characterised in that the elastomeric member (16) is cup-shaped, the surface (23) provided with the ribs being an outer peripheral conical surface thereof.

6. A seal according to any one of the preceding claims, characterised in that each reinforcing element has a shoulder portion (25) bent radially towards the other reinforcing element and connected with continuity to the respective cylindrical part (24) thereof; the shoulders being at opposite ends of the elastomeric member (16) so as to receive the axial components of forces acting on the elastomeric member.

7. A seal according to any one of the preceding claims, characterised in that the cylindrical part (24) of each reinforcing element (12,14) has a worked surface (26) opposite the vulcanised surface (25) which is adapted to be fitted directly to the respective relatively movable member (26).

8. A seal according to any one of the preceding claims, characterised in that the injection points (22b) for the manufacture of the member are formed exclusively in correspondence with the ribs (22).

## Patentansprüche

1. Abdichtung (10) mit einem elastischen Dichtungselement von dem Typ, der zwischen zwei relativ zueinander hin- und herbewegliche Elemente (2, 6) eingesetzt werden kann, um sie zu schützen, umfassend: ein als ringförmiger Flansch geformtes, durch verdickte innere und äußere Randteile (17, 18) begrenztes elastomeres Element (16), wobei der innere Randteil (17) an eine äußere Oberfläche eines zylindrischen Teils (24) eines ersten Metallverstärkungselements (12) anvulkanisiert ist, der äußere Randteil an eine innere Oberfläche eines zylindrischen Teils (24) eines zweiten Metallverstärkungselements (14) anvulkanisiert ist; dadurch gekennzeichnet, daß das elastomere Element eine Mehrzahl von Verstärkungsrippen (22) aufweist, die als Einheit damit auf einer Umfangsoberfläche (23) des Elements ausgebildet und aus demselben elastomeren Material wie dieses sind, wobei sich die Rippen radial zwischen den Randteilen erstrecken.

2. Abdichtung nach Anspruch 1, dadurch gekennzeichnet, daß die Mehrzahl von Rippen mindestens zwölf radiale Rippen (22) umfaßt, die in Umfangsrichtung in gleichen Abständen voneinander angeordnet sind.

3. Abdichtung nach Anspruch 1 oder Anspruch 2, dadurch gekennzeichnet, daß die Rippen längs der Randteile in einer abgestuften Weise mit Umfangswülsten (20, 21) verbunden sind.

4. Abdichtung nach einem der vorangehenden Ansprüche, dadurch gekennzeichnet, daß die Dicke der Rippen (22) im wesentlichen gleich der Dicke des elastomeren Elements (16) ist.

5. Abdichtung nach einem der vorangehenden Ansprüche, dadurch gekennzeichnet, daß das elastomere Element (16) napf förmig ist, wobei die mit den Rippen versehene Oberfläche (23) eine äußere konische Umfangsfläche desselben ist.

6. Abdichtung nach einem der vorangehenden Ansprüche, dadurch gekennzeichnet, daß jedes Verstärkungselement einen Schulterteil (25) aufweist, der auf das andere Verstärkungselement zu radial umgebogen ist und übergangslos mit seinem jeweiligen zylindrischen Teil (24) verbunden ist; wobei sich die Schultern an entgegengesetzten Enden des elastomeren Elements (16) befinden, so daß sie die axialen Komponenten von auf das elastomere Element wirkenden Kräften aufnehmen.

7. Abdichtung nach einem der vorangehenden Ansprüche, dadurch gekennzeichnet, daß der zylindrische Teil (24) jedes Verstärkungselements (12, 14) eine zur anvulkanisierten Oberfläche (25) entgegengesetzte, bearbeitete Oberfläche (26) aufweist, die angepaßt ist, um direkt an dem jeweiligen relativ beweglichen Element (26) angebracht zu werden.

8. Abdichtung nach einem der vorangehenden Ansprüche, dadurch gekennzeichnet, daß die Einspritzpunkte (22b) für die Herstellung des Elements ausschließlich in Entsprechung mit den Rippen (22) gebildet sind.

## Revendications

1. Un joint d'étanchéité (10) ayant un organe d'étanchéité élastique du type qui peut être inséré entre deux organes (2, 6) susceptibles de se déplacer alternativement l'un par rapport à l'autre pour les protéger, comprenant un organe en élastomère (16) réalisé sous la forme d'un flasque annulaire délimité par des parties de bordure intérieure et extérieure (17, 18) épaissies, la partie de bordure intérieure (17) étant vulcanisée (adhérisée) à une surface extérieure d'une partie cylindrique (24) d'un premier élément métallique de renforcement (12), la partie de bordure extérieure étant vulcanisée (adhérisée) à une surface intérieure d'une partie cylindrique (24) d'un deuxième élément métallique de renforcement (14): caractérisé en ce que l'organe en élastomère présente une pluralité de nervures de renforcement (22) formées monobloc avec ce dernier sur une surface périphérique (23) de l'organe et réalisées dans le même matériau élastomère, les nervures s'étendant radialement entre lesdites parties de bordure.

2. Un joint d'étanchéité selon la revendication 1, caractérisé en ce que la pluralité de nervures comprend au moins douze nervures radiales (22) qui sont espacées circonférentiellement à des intervalles identiques les unes des autres.

3. Un joint d'étanchéité selon la revendication 1 ou la revendication 2, caractérisé en ce que les nervures sont reliées de manière progressive à des moulures périphériques (20, 21) le long des parties de bordure.

4. Un joint d'étanchéité selon l'une quelconque des revendications précédentes, caractérisé en ce que l'épaisseur des nervures (22) est sensiblement égale à l'épaisseur de l'organe en élastomère (16).

5. Un joint d'étanchéité selon l'une quelconque des revendications précédentes caractérisé en ce que l'organe en élastomère (16) est en forme de coupelle, la surface (23) pourvue des nervures étant sa surface conique périphérique extérieure.

6. Un joint d'étanchéité selon l'une quelconque des revendications précédentes. caractérisé en ce que chaque élément de renforcement présente une partie d'épaulement (25) repliée radialement vers l'autre élément de renforcement et reliée avec continuité à sa partie cylindrique (24) respective; les épaulements se trouvant aux extrémités opposées de l'organe en élastomère (16), de manière à recevoir les composantes axiales des forces agissant sur l'organe en élastomère.

7. Un joint d'étanchéité selon l'une quelconque des revendications précédentes, caractérisé en ce que la partie cylindrique (24) de chaque élément de renforcement (12, 14) présente une surface usinée (26), qui est opposée à la surface vulcanisée (25) et qui est apte à être montée directement sur l'organe respectif (26) relativement mobile.

8. Un joint d'étanchéité selon l'une quelconque des revendications précédentes, caractérisé en ce que les points d'injection (22b) pour la fabrication de l'organe sont formés exclusivement en correspondance avec les nervures (22).
